(19)

Europäisches
Patentamt
European
Patent Office
Office européen
des brevets

(11) **EP 4 349 180 A1**

(12) **EUROPEAN PATENT APPLICATION**
published in accordance with Art. 153(4) EPC

(43) Date of publication:
**10.04.2024 Bulletin 2024/15**

(21) Application number: **22816096.6**

(22) Date of filing: **31.05.2022**

(51) International Patent Classification (IPC):
**A23G 1/00** *(2006.01)*

(52) Cooperative Patent Classification (CPC):
**A23G 1/00**

(86) International application number:
**PCT/JP2022/022078**

(87) International publication number:
**WO 2022/255350 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 JP 2021091933**

(71) Applicant: **MEIJI CO., LTD**
**Chuo-ku**
**Tokyo 104-8306 (JP)**

(72) Inventors:
• **KIKUCHI Takamitsu**
**Hachioji-shi, Tokyo 192-0919 (JP)**
• **SHIMAMURA Terutaro**
**Hachioji-shi, Tokyo 192-0919 (JP)**

(74) Representative: **TBK**
**Bavariaring 4-6**
**80336 München (DE)**

(54) **CACAO FRUIT PULVERIZED ARTICLE, AND METHOD FOR PRODUCING SAME**

(57) An object is to provide a novel food material that can effectively utilize characteristic color tones derived from anthocyanins, maintains a large amount of procyanidins, which are functional ingredients of cacao, and is applicable to a variety of foods. A cacao fruit ground product having a pH of 4.5 or lower and electroconductivity is provided. The color tone of the cacao fruit ground product is defined with an L* value of 29 or larger, an a* value of 18 or larger, and a b* value of 25 or smaller.

EP 4 349 180 A1

**Description**

Technical Field

The present invention relates to a cacao fruit ground product and a method for producing the same. The present invention is useful in the fields of food manufacturing and so forth.

Background Art

Cacao beans are generally fermented and dried in the producing countries, and then exported, and they are roasted, ground, or otherwise processed at factories, and used to produce chocolate. Cacao mass and cocoa powder have been traditionally well known as food materials derived from cacao, but several other materials have also been attempted.

For example, Patent document 1 proposes a method for treating unfermented cacao beans, comprising (a) the step of preparing a suspension of unfermented cacao beans with or without pulp and mucilage by adding water to the beans, (b) the step of subjecting the suspension to a wet grinding treatment, (c) the step of subjecting the suspension to a heat treatment at a temperature of 70°C or lower, (d) the step of separating the suspension into an aqueous phase (heavy phase), a fatty phase (light phase) containing cocoa butter as a major ingredient and solids and/or moisture as nonmajor ingredients, and a solid phase containing cocoa powder and moisture, and (e) the step of separately treating these three phases, wherein the steps comprise separating the cocoa butter from the fatty phase, separating the cocoa powder from the solid phase, and separating the cocoa flavor and polyphenol powder from at least the aqueous phase, each as necessary, the unfermented cacao beans are not pre-dried, the unfermented cacao beans have been subjected to an incubation step prior to the step (a), and the incubation step comprises immersing the unfermented cacao beans in an ethanol solution in a sufficient volume for covering the unfermented cacao beans at a temperature of 10 to 70°C for 2 hours to 10 days. Patent document 2 proposes a method for producing a red or purple cacao-derived material, comprising (i) the step of treating cacao nibs obtained from beans or seeds having a polyphenol content higher than that of fermented cacao beans with an acid, and (ii) the step of drying the nibs as the case may be, wherein the red or purple cacao-derived material contains at least 20 mg/g of polyphenols, the beans or seeds are unfermented or fermented for up to 3 days, and the method further comprises the step of pre-drying and/or heating the cacao beans or seeds to produce cacao nibs, and does not comprise addition of enzymes. Further, Patent document 3 proposes a method for producing low-flavor cocoa from non-fermented cacao beans, comprising the steps of treating the cacao beans to destroy their cell structure and oxidizing them, wherein pH of the cacao nibs in the step of destroying the cell structure is 4.5 or lower or 6.0 or higher.

Patent document 4 proposes a cacao product having a fruity flavor, which is selected from the group consisting of cocoa powder, cocoa liquor and cocoa fat, contains fruity aroma compounds including at least 2.5 $\mu$g/kg of ethyl 2-methylpropanoate, at least 7.5 $\mu$g/kg of ethyl 2-methylbutanoate, at least 10 $\mu$g/kg of ethyl 3-methylbutanoate, at least 50 $\mu$g/kg of phenylacetaldehyde, and at least 100 $\mu$g/kg of 4-hydroxy-2,5-dimethyl-3(2H)-furanone, and is derived from well-fermented cacao beans. Patent document 5 proposes a method for reducing polyphenol oxidase activity of cacao beans for obtaining cacao beans with reduced polyphenol oxidase activity and high polyphenol content. This method comprises the step of steaming non-fermented and non-roasted raw cacao beans with water vapor and drying them to provide cacao beans with reduced polyphenol oxidase activity, wherein the non-fermented and non-roasted raw beans are selected from the group consisting of slate, brown, or purple cacao beans. Further, Patent document 6 proposes a method for producing a red cocoa product for use in the production of a food or food ingredient, comprising the step of preparing under-fermented or substantially unfermented cacao bean composition, the step of recovering nibs from the cacao beans, the step of treating the nibs with an acidic composition, the step of then washing and drying the nibs, and the step of processing the nibs into a cocoa product for use in a food or food ingredient, wherein the cocoa product has a red hue, and can be used in a food in an amount of at 1% by weight or more, and the food exhibits an acceptable taste profile concerning astringency or bitterness.

Prior Art References

Patent documents

Patent document 1: Japanese Patent Unexamined Publication (Kohyo) No. 2018-520701 (Japanese Patent No. 6655177)
Patent document 2: Japanese Patent Unexamined Publication (Kohyo) No. 2011-509681 (Japanese Patent No.

5323862)
Patent document 3: International Publication WO2000/022935
Patent document 4: Japanese Patent Unexamined Publication (Kohyo) No. 2014-509873 (Japanese Patent No. 6434308)
Patent document 5: U.S. Patent No. 8,048,469
Patent document 6: Japanese Patent Unexamined Publication (Kohyo) No. 2011-502541

Summary of the Invention

Object to be achieved by the invention

The current main stream of foods using cacao beans is chocolate made from cacao mass as a raw material obtained by grinding cacao nibs and having a high oil content (cacao nibs correspond to cacao beans from which shells are removed, which are usually made from fermented cacao beans, roasted to bring out the aroma, and coarsely ground). Cacao beans also contain anthocyanins that produce a wide range of colors from orange-yellow to red, purple, and blue, depending on pH and other conditions, but the anthocyanins easily cause browning due to oxidation, and chocolate and products made from chocolate are usually brown in color.
Cacao beans also contain procyanidins, which are functional ingredients, but there is a concern that they are greatly reduced by fermentation and roasting.

Means for achieving the object

Through various investigations of novel food materials derived from cacao, the inventors of the present invention found that by treating cacao fruits at an acidic pH and inhibiting activities of enzymes that oxidize procyanidins, it is possible to produce a novel food material that can effectively utilize the characteristic color tones derived from anthocyanins, or maintains a high level of procyanidins, which are functional ingredients of cacao, and can be applied to various foods, and accomplished the present invention.
The present invention provides the followings.

[1] A cacao fruit ground product having a pH of 4.5 or lower, a color tone of an L* value of 29 or larger, an a* value of 18 or larger, and a b* value of 25 or smaller, preferably an L* value of 40 or larger, an a* value of 18 or larger, and a b* value of 25 or smaller, and elecroconductivity.
[2] The cacao fruit ground product according to 1, which contains 3.5 mg/g or more of procyanidins based on solid content.
[3] The cacao fruit ground product according to 1 or 2, which has such a particle size as to pass through 20 mesh.
[4] The cacao fruit ground product according to any one of 1 to 3, wherein remaining ratio of procyanidins derived from raw material cacao beans is 80% or higher.
[5] A method for producing a cacao fruit ground product that has been ground and subjected to an enzyme inactivation treatment, which comprises the following steps:

the step of grinding cacao fruits under such conditions that moisture is present, and activity of polyphenol oxidase derived from the cacao fruits is effectively inhibited, and
the step of inactivating polyphenol oxidase derived from the cacao fruits.

[6] The production method according to 5, wherein the condition for effectively inhibiting the activity of the polyphenol oxidase derived from cacao fruits is acidity.
[7] The production method according to 5 or 6, wherein the enzyme inactivation treatment comprises heating at 80 to 121°C for 10 seconds or longer and then cooling.
[8] A method for producing a food material having a color tone of an L* value of 29 or larger, an a* value of 18 or larger, and a b* value of 25 or smaller, preferably an L* value of 40 or larger, an a* value of 18 or larger, and a b* value of 25 or smaller, comprising the following steps:

the step of grinding cacao fruits in the presence of moisture at an acidic pH;
the step of inactivating polyphenol oxidase derived from the cacao fruits; and
the step of obtaining the ground and enzyme-inactivated cacao fruit ground product as a food material.

[9] The production method according to 8, which further comprises the step of adjusting pH of the enzyme-inactivated cacao fruit ground product to 4.5 or lower.

Effect of the Invention

The food material provided by the present invention can be applied to a wide range of foods, such as beverages and frozen desserts, taking advantage of its color tone and properties (it favorably compatible with water and can be easily mixed with foods of high water content).

According to the present invention, a food material that maintains high content of polyphenols derived from raw material cacao and exhibits an excellent color tone can be provided.

By using the food material of the present invention, it is possible to provide a cacao-containing food that contains high level of polyphenols and takes advantage of the characteristic color tones derived from anthocyanins (e.g., red, light red, pink, pale pink, etc.).

According to the present invention, the shell portions of raw material cacao can be utilized as a food material without discarding them.

Brief Description of the Drawings

[Fig. 1] Remaining ratios of procyanidins in cacao fruit pastes.

[Fig. 2] Amounts of procyanidins based on solid content of cacao fruit pastes.

[Fig. 3] Remaining ratios of epicatechin in cacao fruit pastes.

[Fig. 4] Amounts of epicatechin based on solid content of cacao fruit pastes.

[Fig. 5] Median particle diameters of cacao fruit pastes

[Fig. 6] Mean particle diameters of cacao fruit pastes

[Fig. 7] Photographs of the drinks of Production Example 3 after they were poured into measuring cylinders, left to stand, and kept refrigerated. From left to right: Drink 1 (example), Drink 2 (comparative example), and Drink 3 (comparative example).

[Fig. 8] Photographs of the ice cream mixes of Production Example 4 after they were poured into measuring cylinders, left to stand, and kept refrigerated. From left to right: Ice cream mix 1 (example), Ice cream mix 2 (comparative example), and Ice cream mix 3 (comparative example).

Modes for Carrying out the Invention

[Cacao fruit ground product]

The present invention relates to a cacao fruit ground product.

(Cacao fruit)

Concerning the present invention, the term "cacao fruit" refers to the portions of pulp and beans (consisting of nibs, germs and shells) obtained by removing hard husks from cacao pods, unless especially stated. Cacao fruits contain pulp unlike cacao beans, but a part of the pulp may be removed. Cacao fruits also contain shells unlike cacao nibs, but a part of the shells may be removed. Concerning the present invention, the term "cacao fruit ground product" refers to a ground product that contains a part (or all) of cacao pulp and a part (or all) of cacao beans, unless especially stated. This product includes a ground product of cacao pulp juice or concentrate thereof and beans, and a ground product of pulp and nibs.

The variety and production region of the cacao beans used as the raw material for the cacao fruit ground product of the present invention are not particularly limited. Examples of cacao varieties include Forastero, Criollo, Trinitario varieties, derivatives and hybrids thereof. Examples of the regions of production include Ghana, Cote d'Ivoire, Nigeria, Brazil, Venezuela, and Trinidad and Tobago.

In general, cacao beans used as a raw material for chocolate are extracted from cacao pods (cacao nuts) together with pulp, fermented, and dried. However, the raw material cacao beans used for the cacao fruit ground product of the present invention may be either unfermented or fermented. Furthermore, those dried with suppressing fermentation by a known means after harvesting can be used.

From the viewpoint of obtaining a cacao fruit ground product having a high procyanidin content, it is preferred that the raw material cacao beans have not undergone a process in which procyanidins are reduced. Procyanidins are reduced by the actions of enzymes promoted under the fermentation conditions and high temperatures. Therefore, it is preferred that the raw material cacao beans preferably used in the present invention have not been fully fermented and have not been roasted. The expression of fully fermented means that the cacao beans have been fermented for 7 days or longer after harvesting.

From the viewpoint of obtaining a cacao fruit ground product having a vivid color tone, it is preferred that the raw material cacao beans are fresh cacao beans immediately after extraction from the cacao pods. It is also preferred that such fresh cacao beans are placed under such conditions that activities of contained enzymes can be inhibited, or immediately used in order to avoid oxidation of procyanidins by the action of the enzymes.

(Ground product)

Concerning the present invention, the term "ground product" refers to a product in a ground state. The particle size of the ground product is not particularly limited, but one of the preferred examples is a particle size that allows particles to pass through 20 mesh (0.70 to 1.05 mm, e.g., 0.87 mm).

The cacao fruit ground product may contain undisrupted cacao bean cells. The size of the undisrupted cacao bean cells is not particularly limited. Cacao bean cells vary in size, but the smallest diameter is about 10 $\mu$m, and therefore the cacao fruit ground product of the present invention may contain particles of about 10 $\mu$m or larger. The aforementioned particles refer to cacao bean cells themselves, or aggregates of cacao bean cells. The aforementioned aggregates of cacao bean cells include cacao bean cells that are not separated and remain in a state of a tissue of adhered cells, as well as cacao bean cells that are once separated and then aggregated. The particle size of the cacao fruit ground product can be measured by particle size distribution measurement using a sample prepared with water as a dispersant. The measurement is performed three times or more for the same measurement sample. The median diameter of the cacao fruit ground product of the present invention is, for example, 70 to 500 $\mu$m, preferably 80 to 450 $\mu$m, more preferably 90 m to 420 $\mu$m. The mean particle size of the cacao fruit ground material of the present invention is, for example, 40 to 450 $\mu$m, preferably 50 to 400 $\mu$m, more preferably 60 to 350 $\mu$m. Concerning the present invention, the particle sizes of the ground product are indicated with values based on volume/mass measured by the laser diffraction and scattering method, unless otherwise stated.

Concerning the present invention, the expression that the particle size distribution of the cacao fruit ground product is within a specific range means that particle sizes of 70%, preferably 80%, more preferably 90%, further preferably 95%, still further preferably 98%, of the particles are within that specific range as measured by the laser diffraction and scattering method in the particle size distribution measurement of that cacao fruit ground product, unless otherwise stated. The % values used herein are values based on volume.

The cacao fruit ground product of the present invention may also be in the form of paste. The cacao fruit ground product of the present invention can also be processed into a processed product in the form of a dried product or the like. The paste or dried product can be further processed into a molded form (e.g., those of disc-shape, cube-shape, etc.). In addition, the dried material can be ground into powder, the paste or dried material can be processed into granules using general granulation techniques, or the physical properties thereof can be changed by an enzymatic treatment (e.g., treatment with an enzyme that decomposes polysaccharides to reduce viscosity). The cacao fruit ground product or processed product thereof may be in the form of a frozen product or in a container-packed form.

(Electroconductivity and moisture content)

Unlike the conventional chocolate, chocolate raw materials in which oil constitutes a continuous phase, such as cacao mass and cocoa butter, and solid or powdery chocolate raw materials such as cacao nibs, cocoa cake, and cocoa powder (cocoa), the cacao fruit ground product of the present invention has a continuous phase of water despite that it contains abundant solids derived from cacao beans having a high oil content, and its electroconductivity (whether it is electroconductive or not) can be confirmed by measurement using a tester. For example, when resistance of the product is measured by using a tester (Card Hitester, Model 3244-60, Hioki E.E. Corporation), if a measured value is displayed, it is judged to be "electroconductive". If the object is not electroconductive, the resistance exceeds the maximum value that can be displayed by the tester, 42 M$\Omega$, therefore the measured value is not displayed, but "OF" is displayed.

The cacao fruit ground product of the present invention contains moisture. The moisture content can be arbitrarily controlled according to the food in which the cacao fruit ground product is used, but it is, for example, 10% or higher, and may be 20% or higher, 30% or higher, 40% or higher, 50% or higher, or 60% or higher. The maximum of moisture content is not particularly limited, but the moisture content is, for example, 90% or lower, and may be 80% or lower, or 70% or lower. Concerning the present invention, when contents are referred to for ingredients of the cacao fruit ground product, the contents are based on weight, unless otherwise stated.

(pH)

The cacao fruit ground product of the present invention has a pH at which anthocyanins can exhibit a vivid color tone. For example, such a pH is 4.5 or lower, preferably 4.3 or lower, more preferably 4.2 or lower. The lower limit of pH is not particularly limited, but pH should be at a level acceptable as a food, for example, 1 or higher, and may be 2 or higher, 2.5 or higher, or 2.9 or higher. In the present invention, "pH" can be measured by directly contacting electrodes of a pH meter to the measurement object.

(Color tone)

The cacao fruit ground product of the present invention has a vivid color tone. The color tone of the cacao fruit ground product of the present invention can be definitely indicated by the color coordinates developed by R.S. Hunter. In this system, the color coordinates are indicated by any selected from L* value, a* value, b* value, C* value, and h° value. The values of the color coordinates can be obtained by appropriate measurement means, such as a colorimeter. The conditions for the measurement can be appropriately chosen by those skilled in the art, but it is preferably measured within two days after the preparation of the measurement object, more preferably on the day of the preparation. For example, a spectrophotometer CR-5 (Konica Minolta, Inc.) is used as a measurement device to measure CIE L*a*b* for about 40 ml of a sample at room temperature placed in a special petri dish (container).

An L* value closer to 0 means a darker color tone, a larger a* value indicates a red color, and a larger b* value indicates a yellow color of the object. As far as red is concerned, the larger the a*/b* value is, the more reddish the object is.

The cacao fruit ground product of the present invention has, for example, an L* value of 29 or larger, an a* value of 18 or larger, and a b* value of 25 or smaller, preferably an L* value of 40 or larger, an a* value of 18 or larger, and a b* value of 25 or smaller, more preferably an L* value of 40 or larger, an a* value of 22 or larger, and a b* value of 25 or smaller, further preferably an L* value of 40 or larger, an a* value of 25 or larger, and a b* value of 25 or smaller.

From the viewpoint of favorable red color of the cacao fruit ground product of the present invention, the a* value/b* value, which serves as an index of red color, should be 0.80 or larger, preferably 1.2 or larger, more preferably 1.5 or larger, even more preferably 2.0 or larger.

The cacao fruit ground product of the present invention may have a relatively high b* value, and it may be, for example, 13.0 or larger.

(Procyanidins)

The cacao fruit ground product of the present invention contains relatively high levels of procyanidins. This is because the enzymes that oxidize procyanidins contained in cacao fruits are inactivated by the enzyme inactivation treatment as described below. Specifically, the cacao fruit ground product of the present invention contains 3.5 mg/g or more, preferably 5.0 mg/g or more, more preferably 6.0 mg/g or more, even more preferably 7.0 mg/g or more, of procyanidins based on the solid content.

Concerning the present invention, procyanidins refer to catechin, epicatechin, procyanidin B2, procyanidin B5, procyanidin C1, and cinnamtannin A2, unless otherwise stated. When amounts, ratios, and remaining ratios of procyanidins are indicated, they are values measured by using HPLC with epicatechin as the standard and calculated as epicatechin equivalent amounts of the ingredients, unless otherwise stated.

Concerning the present invention, solid content of the cacao fruit ground product is indicated with a value obtained by subtracting the moisture content of the cacao fruit ground product measured by the method described in the Japanese Standard Tables of Food Composition 2015 (7th Revision) or a similar appropriate method from the total amount of the cacao fruit ground product, unless otherwise stated.

The cacao fruit ground product of the present invention shows a high remaining ratio of procyanidins derived from raw material cacao fruits. This is because the enzymes contained in cacao fruits that oxidize procyanidins are inactivated by the enzyme inactivation treatment as described below. Specifically, the remaining ratio of procyanidins derived from raw material cacao fruits of the cacao fruit ground product of the present invention is 70% or higher, preferably 80% or higher, more preferably 85% or higher, even more preferably 90% or higher.

The cacao fruit ground product of the present invention contains a relatively large amount of epicatechin among procyanidins. Specifically, the cacao fruit ground product of the present invention contains 1.6 mg/g or more, preferably 1.8 mg/g or more, more preferably 2.0 mg/g or more, even more preferably 2.2 mg/g or more, of epicatechin based on the solid content.

The cacao fruit ground product of the present invention has a high remaining ratio of epicatechin derived from raw material cacao fruits. Specifically, the cacao fruit ground product of the present invention has a remaining ratio of epicatechin derived from raw material cacao fruits of 70% or higher, preferably 80% or higher, more preferably 85% or higher, even more preferably 90% or higher. Epicatechin is a monomer and shows high water solubility and reactivity. Therefore, it is considered that it is more easily oxidized and more easily polymerizes, and is more affected by pH and heat (it is easily decomposed at high temperatures and under alkaline conditions) compared with the other procyanidins. Therefore, the epicatechin amount is reduced in the conventional technique materials such as cacao nibs and cacao mass.

(Other characteristics)

The cacao fruit ground product of the present invention has a property that oils hardly seep out from it. This is presumably due to the low free fat content based on oil content of the product. In the field of chocolate, free fat (free oil or fat) refers to oil or fat that is present in a material in a free state. Free fats affect the flowability and viscosity of chocolate. It is also believed that oils more easily seep out from materials that contain a larger amount of free fats.

Concerning the present invention, the free fat content ratio based on sample weight (also referred to simply as free fat content ratio) refers to a value measured and calculated by the following method, unless especially stated.

Measurement of free fat content

(1) Determine exact weight of a 50-ml glass bottle with a lid in which a sample is to be weighed (a).
(2) Place approximately 5 g of the sample (b) in the glass bottle described in (1) mentioned above.
(3) Add 25 ml of n-hexane and vigorously stir the mixture (using a vortex stirrer).
(4) Shake the mixture at 162 rpm and 25°C for 3 hours.
(5) Centrifuge the mixture at 3000 rpm and 25°C for 10 minutes.
(6) Discard the supernatant of (5) mentioned above and air-dry the residue overnight in a draft.
(7) Weigh (6) mentioned above after air-drying (c).

$$<x> \text{ Free fat content ratio based on sample weight (\%)} = ((a + b) - c)/b \times 100$$

$$<y> \text{ Free fat content ratio based on oil content (\%)} = <x>/\text{oil content in } b \times 100$$

$$<z> \text{ Free fat content ratio based on solid content (\%)} = <x>/(b - \text{moisture in } b) \times 100$$

The free fat content ratio based on sample weight of the cacao fruit ground product of the present invention is, for example, 10% or lower, preferably 9% or lower, more preferably 8% or lower, even more preferably 7% or lower, even more preferably 6% or lower, even more preferably 5% or lower. The free fat content ratio based on oil content of the cacao fruit ground product of the present invention is, for example, 60% or lower, preferably 50% or lower, more preferably 40% or lower, even more preferably 30% or lower, even more preferably 25% or lower, even more preferably 20% or lower, even more preferably 18% or lower, even more preferably 15% or lower, especially preferably 12% or lower. Further, the free fat content ratio based on solid content of the cacao fruit ground product of the present invention is, for example, 3.5% or lower, preferably 3.3% or lower, more preferably 3.1% or lower, even more preferably 2.9% or lower, even more preferably 2.8% or lower, especially preferably 2.7% or lower. If the free fat content ratio is within the aforementioned ranges, the product shows particularly little oil seepage, excellent compatibility with aqueous foods, and thus has desirable characteristics.

The free fat content ratio of unprocessed cacao beans is generally low, but the free fat content of conventional cacao bean processed products is high, because the cells are disrupted during the production processes. For example, the free fat content based on sample weight of cacao mass is about 50%. On the other hand, in the cacao fruit ground product of the present invention, the oils or fats derived from cacao beans are sealed in the cacao bean cells having undisrupted cell membranes, and therefore the product has a distinctive characteristic not found in conventional cacao bean processed products, namely, a low free fat content ratio, despite that it contains a reasonably high concentration of oils or fats derived from cacao beans.

(Suitability as food material)

The cacao fruit ground product of the present invention can be used as a food material to give high procyanidin content and characteristic anthocyanin-derived color tones (e.g., red, light red, pink, pale pink, etc.) to foods. Feeling of eating fresh raw cacao fruits could be obtained from such foods. In addition, fruity acidity and flowery aroma could also felt from such foods.

The cacao fruit ground product of the present invention is also suitable for use in foods for which less oil seepage is desirable. This characteristic also allows the cacao fruit ground product of the present invention to impart appropriate viscosity and fluidity to raw material mixtures and foods when it is used as a food material. Therefore, the cacao fruit ground product of the present invention is suitable for use in the production of foods such as ice cream, for which moderate fluidity is used in the production process thereof, and can also be used in drinks, for which thirst-stopping properties are required. On the other hand, since it can make foods contain high concentrations of fats and oils, it is also suitable for use in foods that require smoothness, sticky texture, and rich texture.

In addition, by using the cacao fruit ground product as a food material, it can impart a fresh, raw cacao-like flavor, such as fruity acidity and flowery aroma, to foods.

(Additive)

The cacao fruit ground product of the present invention may contain additives that are acceptable for foods. Examples of such additives are sweeteners, antioxidants, flavors, acidifiers, excipients, surfactants, binders, disintegrants, lubricants, dissolution aids, suspending agents, coating agents, coloring agents, preservatives, buffers, pH adjusters, emulsifiers, stabilizers, thickening agents, etc.

[Production method]

The present invention also provides a method for producing a ground and enzyme-deactivated cacao fruit ground product, which comprises the following steps:

the grinding step of grinding cacao fruits under such conditions that moisture is present, and activity of polyphenol oxidase derived from the cacao fruits is effectively inhibited, and
the enzyme inactivation treatment step of inactivating polyphenol oxidase derived from the cacao fruits.

(Grinding step)

The method for producing the cacao fruit ground product includes the grinding step. The grinding is performed under a condition where moisture is present. The moisture content during grinding is not particularly limited so long as grinding can be performed, but grinding is performed under such conditions that there is, for example, 30% or more, preferably 40% or more, more preferably 50% or more, especially preferably 60% or more, of moisture. The total amount of moisture and cacao beans is 90% or less, preferably 80% or less, more preferably 70% or less. By adding water during the grinding, the grinding efficiency can be improved. In addition, addition of water makes the ground product more fluid, which facilitates transfer and conveyance through piping during the production process. However, when obtaining a ground product of concentrated type with low moisture content, it is preferable to add a small volume of water.

On the other hand, in the presence of moisture, polyphenol oxidase derived from cacao fruit acts on and oxidizes procyanidins, which are functional ingredients, and therefore the grinding is performed under such a condition that the activity of polyphenol oxidase is effectively inhibited. Examples of such a condition that the activity of polyphenol oxidase is effectively inhibited are acidic condition and low temperature condition.

The acidic condition can be achieved by selecting and using at least one or more kinds of organic acids such as citric acid, malic acid, tartaric acid, and phosphoric acid, fruit juice, concentrated fruit juice, and cacao pulp that is acidic by itself or processed products thereof (e.g., cacao pulp juice). The concentration and amount of acid to be used can be determined by those skilled in the art, taking into consideration the pH to be achieved. The acidic condition can be, for example, pH 4.5 or lower, preferably pH 4.3 or lower, more preferably pH 4.2 or lower. The lower limit of pH is not particularly limited, but pH can be set to a level acceptable as a food, and thus the acidic condition can be, for example, pH 1 or higher, pH 2 or higher, pH 2.5 or higher, or pH 2.9 or higher.

The low temperature condition is, for example, 10°C or lower, or may be 5°C or lower, or 0°C or lower. The raw cacao fruits may be frozen and ground.

The grinding may be performed in the presence of an antioxidant or reducing agent acceptable as a food additive to inhibit browning caused by oxidation of anthocyanins and to maintain stability of procyanidins. Examples of antioxidant or reducing agent acceptable as food additives are L-ascorbic acid (vitamin C), erythorbic acid (isoascorbic acid), catechin, dibutylhydroxytoluene (BHT), tocopherol (vitamin E), and butylated hydroxyanisole (BHA).

The grinding means used in the grinding step is not particularly limited so long as the cacao fruits can be ground to the desired particle size. Examples of grinding means include common grinding machines such as mixers and mills.

(Enzyme inactivation treatment step)

The production method of the present invention includes an enzyme inactivation treatment step. Procyanidins are considered to be decomposed and reduced by oxidation by the enzyme contained in cacao fruits, polyphenol oxidase, and non-enzymatic oxidation. In order to ensure the stable presence of procyanidins and maintain high content thereof, it is important to perform a heat treatment to inactivate the polyphenol oxidase during the production process. The enzyme inactivation treatment can be carried out by placing the materials of the product at a high temperature for a certain period of time. The high temperature means, for example, 80°C or higher, and 90°C or higher is more preferable. The enzyme inactivation treatment step of the production method of the present invention is carried out at a temperature lower than the temperature at which the cacao beans are roasted, e.g., 121°C or lower. Although the treatment time depends on the temperature, it is, for example, 5 seconds to 10 minutes, and 10 seconds to 5 minutes is preferred. Examples of preferred conditions for the enzyme inactivation treatment are 80 to 121°C for 10 to 20 seconds.

After heating for a predetermined time, cooling may be performed. Cooling is also preferred from the viewpoints of inhibiting microbial growth, maintaining functional ingredients, and preventing browning.

The means for enzyme inactivation, i.e., heat treatment, is not particularly limited so long as the object can be heated to the required temperature. Examples of the means for heating include boiling, steaming, stewing, steaming, and microwave heating.

(Method for producing food material)

According to the present invention, a food material having a vivid color tone can be produced from cacao fruits as a raw material. Such a production method includes the following steps:

the step of grinding cacao fruits under such conditions that moisture is present, and activity of polyphenol oxidase derived from the cacao fruits is effectively inhibited,
the step of inactivating polyphenol oxidase derived from the cacao fruits, and
the step of obtaining the ground and enzyme-inactivated cacao fruit ground product as a food material.

Vivid color tone means a color tone of an L* value of 29 or larger, an a* value of 18 or larger, and a b* value of 25 or smaller, preferably an L* value of 40 or larger, an a* value of 18 or larger, and a b* value of 25 or smaller. Such a color tone has been described above.

The method for producing a food material of the present invention preferably further comprises the step of adjusting pH of the enzyme inactivation-treated cacao fruit ground product to 4.5 or lower. The low pH region is important for maintaining the red coloration of anthocyanins contained in the cacao fruits. The low pH region is also desirable for stability of the procyanidins.

(Other optional steps)

In the production method of the present invention, an aerating treatment may be performed during the cooling step described above. By the aerating treatment, a cacao fruit ground product having a reduced specific gravity can be obtained. Such a cacao fruit ground product with reduced specific gravity may be frozen.

The production method of the present invention may comprise various steps commonly used in conventional food manufacturing, such as concentration step, drying step, freezing step, and container filling step, if desired.

[Food using ground cacao fruit product]

The cacao fruit ground product of the present invention can be used as a raw material in the manufacture of a food or pharmaceutical product. Although the following description will be given for foods as an example among the foods and pharmaceuticals, namely, for the cases where the cacao fruit ground product of the present invention is used as a food material, those skilled in the art can understand how the description will be applied to pharmaceutical products.

The foods include not only those for humans, but also those for animals other than humans, unless especially stated. The foods include general foods, functional foods, and nutritional cacao fruit ground products, therapeutic foods (foods that can achieve therapeutic purposes; foods prepared on the basis of a menu prepared by a nutritionist, etc. in accordance with a diet slip prescribed by a medical practitioner), dietetic food, food with adjusted ingredients, nursing care foods, and foods for therapeutic support, unless especially stated. The foods include not only solid foods but also liquid foods such as beverages, drink preparations, liquid foods, and soups, unless especially stated.

The functional foods refer to foods that can impart a predetermined functionality to a living body, and generally include health foods, for example, foods for specified health uses (including conditional foods for specified health uses [Tokuho]), foods with function claims, foods with health claims including foods with nutrient function claims, foods for special dietary uses, nutritional supplement foods, health supplement foods, supplements (for example, those of various kinds of dosage forms such as tablets, coated tablets, sugar-coated tablets, capsules, and solutions), cosmetic foods (for example, diet foods), and so forth. In addition, concerning the present invention, the functional foods also include health foods to which a health claim based on the Codex Alimentarius (Joint FAO/WHO Food Standards Programme Codex Committee) is applied.

The cacao fruit ground product of the present invention is electroconductive while containing some oil derived from cacao. In other words, water constitutes a continuous phase. From this viewpoint, foods to which the cacao fruit ground product of the present invention can be preferably applied include oil-based foods, which are suitable for blending conventional cacao-derived food materials such as cacao mass and cocoa powder, as well as aqueous (water-based) foods, to which it has been difficult to apply conventional processed cacao bean products. Oil-based food refers to a food in which oil or fat constitutes a continuous phase. Aqueous food is a food in which water constitutes a continuous phase. The cacao fruit ground product of the present invention according to an embodiment in which the grinding degree is low shows excellent compatibility with water, because it has a low free fat content, and oil does not easily seep out from it, and thus is suitable for blending in aqueous foods.

Foods using the cacao fruit ground product of the present invention as a raw material can be made in any form, such as confectioneries, beverages, seasonings, processed foods, prepared foods, and soups. More specifically, they can be chocolate products (chocolate, quasi-chocolate, chocolate confectionery, quasi-chocolate confectionery, etc.), gummies, tablet confectioneries, chewing gum, candies, snacks, biscuits, crackers, yokan, bean pastes, ice creams, chilled confectionaries, sorbets, frozen yogurts, ice confectioneries, jellies, puddings, fillings, soft drinks, smoothies, fruit juice beverages, vegetable beverages, soy milk beverages, tea beverages, coffee beverages, powdered beverages, carbonated beverages, alcoholic beverages, spreads, margarine, flavor seasonings, dressings, sauces, tare (Japanese sauce for dipping or topping), tsuyu (Japanese soup or dipping sauce), roux, yogurt, cream, cheese, dairy beverages, lactic acid bacteria beverages, bread, pasta, pizza crust, cakes, cakes mixes, prepared milk powders, liquid diets, foods for the sick, nutritional foods, supplements, tablets, frozen foods, retort foods, canned foods, foods for microwave oven, instant soups, instant noodles, and tofu.

The cacao fruit ground product of the present invention can be red in color in the low pH region. From this viewpoint, examples of foods to which the cacao fruit ground product of the present invention can be preferably applied include acidic foods such as beverages, frozen desserts, and fermented milk.

The cacao fruit ground product of the present invention has a high content of procyanidins. From this viewpoint, examples of foods to which the cacao fruit ground product of the present invention can be preferably applied include such foods in which a high content of procyanidins is desired.

Content of the cacao fruit ground product of the present invention in foods is not particularly limited, and can be appropriately determined according to the form of the food, and so forth. For example, the content of the cacao fruit ground product of the present invention in a food can be 1 to 99%, 10 to 90%, or 20 to 60%.

A food containing the cacao fruit ground product of the present invention may contain other food raw materials, other active ingredients and nutritional ingredients acceptable as food in addition to the cacao fruit ground product of the present invention. The cacao fruit ground product may further contain additives acceptable as food.

In the production of foods, stage of blending the cacao fruit ground product is not particularly limited so long as the characteristics of the cacao fruit ground product of the present invention are not significantly impaired. For example, it can be blended with other raw materials in an initial stage of the production.

The cacao fruit ground product of the present invention and foods using the same can be labeled with an indication that it contains cacao fruits, that it contains a large amount of cacao fruits, that it contains any of anthocyanins, procyanidins, and polyphenols, that it contains a large amount of anthocyanins, procyanidins, and polyphenols, or effects that can be expected from any of anthocyanins, procyanidins, and polyphenols, and labeled with an indication that the intake of the food is recommended for a specific target. The indication can be a direct or indirect indication. Examples of the direct indication include indications on tangible objects such as the product itself, package, container, label, tag of the product, etc. Examples of the indirect indication include advertisement or publicity on such places or by such means as websites, storefronts, pamphlets, exhibitions, books, newspapers, magazines, television, radio, mails, e-mails, and voices.

Hereafter, the present invention will be more specifically explained with reference to the following examples.

Examples

[Experimental example: Evaluation of characteristics of cacao fruit paste]

[Preparation of cacao fruit ground product (cacao fruit paste)]

Cacao fruit pastes were prepared by the following steps 1 to 4.
1. Pulp and cacao beans (seeds) were extracted from the cacao pods (cacao fruits) at a room temperature of -20°C.
2. The pulp and cacao beans extracted were ground at a room temperature of -20°C by using a household mixer (Panasonic Fiber Mixer MX-X301), then liquid nitrogen and the ground product were put into a universal grinder (IKA M20), and the product was further ground until a powdery state was obtained. The ground product obtained as described above is called "cacao bean powder". The reason for conducting this step at -20°C is to inhibit oxidation of the ground product.

3. The cacao bean powder and pulp juice (Itochu Corporation) were added in the composition shown in the following table, and the mixture was vigorously stirred with a hand mixer (Bamix M300). Then, water was added, and the mixture was further stirred.

4. Citric acid or baking soda was added to adjust pH.

[Table 1]

| Composition table | |
| --- | --- |
| | Mixing ratio (%) |
| Cacao bean powder | 30 |
| Pulp juice | 40 |
| Water | 30 |
| Citric acid | Appropriate amount |
| Baking soda | Appropriate amount |
| Total | 100 |
| Cacao bean powder pH 5.13, cacao pulp juice pH 3.26 | |

All the obtained ground products were confirmed to have electroconductivity by using a tester (Card Hitester, Model 3244-60, Hioki E.E. Corporation). All of the ground products had such a particle size that they passed through 20 mesh. The moisture content was 63 to 69%.

[Evaluation of color tone]

The color tone was evaluated by numerically expressing differences in color of the pH-adjusted pastes mentioned above using a spectrocolorimeter (spectrophotometer CR-5, Konica Minolta).

A: Particularly favorable (L* value is 39 or larger, a* value is 25 or larger, and b* value is 25 or smaller)
B: Favorable (L* value is 39 or larger, a* value is 22 or larger, and b* value is 25 or smaller)
C: Slightly favorable (L* value is 39 or larger, a* value is 18 or larger, and b* value is 25 or smaller)
D: Unfavorable (L* value is smaller than 39, a* value is smaller than 18, and b* value is larger than 25)

[Table 2]

| | pH2.9 | pH3.2 | pH3.5 | pH3.8 | pH4.2 | pH4.7 | pH5.2 | pH5.8 | pH6.3 | pH6.5 |
| --- | --- | --- | --- | --- | --- | --- | --- | --- | --- | --- |
| L* | 43.2 | 41.9 | 40.4 | 42.9 | 43.4 | 41.2 | 41.6 | 37.3 | 36.6 | 38.0 |
| a* | 32.5 | 25.9 | 19.0 | 22.7 | 18.1 | 16.1 | 14.2 | 13.0 | 11.5 | 10.0 |
| b* | 13.6 | 16.8 | 21.8 | 16.5 | 21.2 | 26.0 | 25.8 | 27.2 | 26.2 | 23.7 |
| Evaluation | A | A | C | B | C | D | D | D | D | D |

As shown above, pastes with a red color tone was obtained at pH 2.9 to 4.2. In addition, at pH 2.9 to 3.2, the L* value was larger than 39, a* value was larger than 25, and b* value was smaller than 20, indicating a more favorable red color tone. The measurements for the pastes of pH 2.9 to 3.5 and pastes of pH 3.8 to 6.5 were performed on different days.

[Evaluation of procyanidin remaining ratio]

The above pH-adjusted pastes were freeze-dried, then defatted and extracted by heat reflux. Then, the amounts of procyanidins in the above pH-adjusted pastes were measured by using high-performance liquid chromatography, and remaining ratio of procyanidins was evaluated. Procyanidins are catechin, epicatechin, procyanidin B2, procyanidin B5, procyanidin C1, and cinnamtannin A2 (the same shall apply in the following examples).

(Measurement of procyanidins)

Procyanidins were quantified by HPLC. Specifically, Deverosil -ODS-HGS (4.6 mm x 250 mm, $\varphi$ 5 $\mu$, Nomura Chemical Co.) was used as the column. The eluent consisted of solution A and solution B, wherein the solution A was 0.1% trifluoroacetic acid aqueous solution, and the solution B was 0.1% trifluoroacetic acid/acetonitrile solution. The flow rate of the eluent passed through the column was 0.8 ml/minute, and the gradient conditions were as follows: the ratio of the solution B to the total eluent was 10% at the start, 10% after 5 minute from the start, 25% after 35 minutes from the start, 100% after 40 minutes from the start, and 100% after 45 minutes from the start. The sample injection volume was 10 $\mu$L. Epicatechin was used as a standard, and the amount of each ingredient was calculated as the epicatechin equivalent amount. Ingredients: catechin, epicatechin, procyanidin B2, procyanidin B5, procyanidin C1, and cinnamtannin A2.

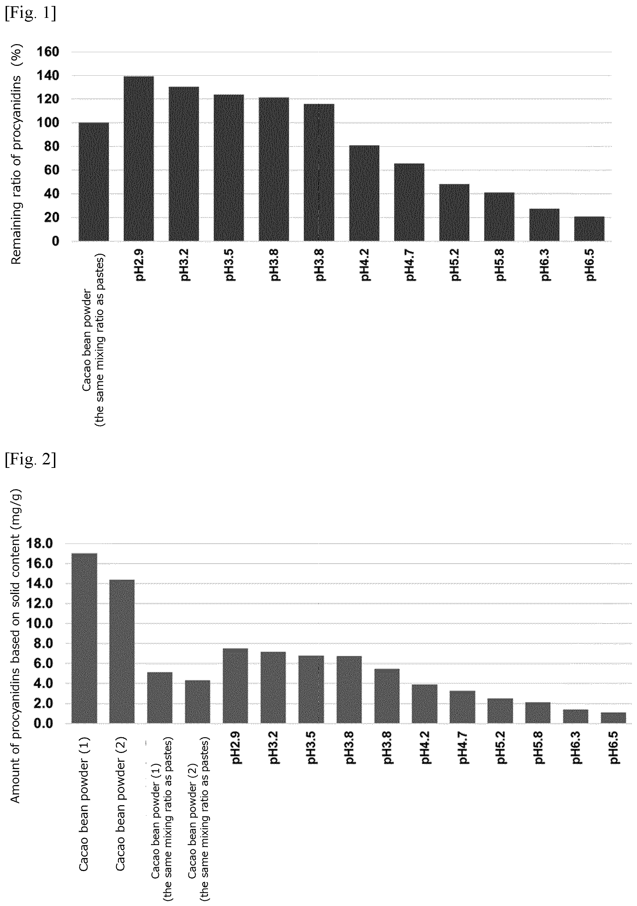

The results are shown in the following table and Fig. 1.

[Table 3]

| | Comparative Example | Paste 1 | Paste 2 | Paste 3 | Paste 4 | Paste 5 | Paste 6 | Paste 7 | Paste 8 | Paste 9 | Paste 10 | Paste 11 |
|---|---|---|---|---|---|---|---|---|---|---|---|---|
| Sample | Cacao bean powder (the same mixing ratio as pastes) | pH 2.9 | pH 3.2 | pH 3.5 | pH 3.8 | pH 3.8 | pH 4.2 | pH 4.7 | pH 5.2 | pH 5.8 | pH 6.3 | pH 6.5 |
| Remaining ratio of procyanidins (%) | 100 | 139 | 131 | 124 | 121 | 116 | 81 | 66 | 48 | 41 | 27 | 21 |
| Evaluation | - | A | A | A | A | A | C | D | D | D | D | D |
| The pH of the suspension of cacao bean powder of the comparative example (solid content of the cacao bean powder: water = 30:70) was 5.13. | | | | | | | | | | | | |

The measurement for the pastes 1 to 4 and the measurement for the pastes 5 to 11 were separately performed. The measurement was performed also for cacao bean powder at the same time at each time, and the remaining ratio was calculated.

(Judgment criteria)

A: Particularly favorable (90% or more)
B: Favorable (85% or more and less than 90%)
C: Slightly favorable (80% or more and less than 85%)
D: Unfavorable (less than 80%)

For the pastes 1 to 5 prepared by the above method did not show reduction in the amount of procyanidins in contrast to the comparative example. Compared with the comparative example, the paste 6 showed a procyanidin remaining ratio of about 80%, and the pastes 7 to 10 showed procyanidins remaining ratios of about 20% to 65%. Therefore, the range of pH 1.0 to 4.5 is preferred, and the range of pH 1.0 to 4.0 is more preferred.

[Evaluation of procyanidin amount]

The above pH-adjusted pastes were freeze-dried, and then defatted and extracted by heat reflux. Then, the amounts of procyanidins in the above pH-adjusted pastes were measured by using HPLC and evaluated.
The results are shown in the following table and Fig. 2.

[Table 4]

| Sample | Comparative Example 1 | Comparative Example 2 | Comparative Example 3 | Comparative Example 4 | Paste 1 | Paste 2 | Paste 3 | Paste 4 | Paste 5 | Paste 6 | Paste 7 | Paste 8 | Paste 9 | Paste 10 | Paste 11 |
|---|---|---|---|---|---|---|---|---|---|---|---|---|---|---|---|
| Sample | Cacao bean powder (1) | Cacao bean powder (2) | Cacao bean powder (1) (the same mixing ratio as pastes) | Cacao bean powder (2) (the same mixing ratio as pastes) | pH 2.9 | pH 3.2 | pH 3.5 | pH 3.8 | pH 3.8 | pH 4.2 | pH 4.7 | pH 5.2 | pH 5.8 | pH 6.3 | pH 6.5 |
| Amount of procyanidins (mg/g) | 17.0 | 14.4 | 5.1 | 4.3 | 7.5 | 7.1 | 6.8 | 6.7 | 5.5 | 3.9 | 3.3 | 2.5 | 2.1 | 1.4 | 1.1 |
| Evaluation | - | - | A | A | A | A | A | A | A | C | D | D | D | D | D |

The measurement for Comparative Examples 1 and 3 and the measurement for Comparative Examples 2 and 4 were separately performed. Similarly, the measurement for the pastes 1 to 4 and the measurement for the pastes 5 to 11 were separately performed. For Comparative Examples 3 and 4, their values were calculated from the results of Comparative Examples 1 and 2, taking into account the cacao bean powder mixing ratio of 30%.

A: Particularly favorable (4.3 mg/g or more)
B: Favorable (4.0 mg/g or more and less than 4.3 mg/g)
C: Slightly favorable (3.5 mg/g or more and less than 4.0 mg/g)
D: Unfavorable (less than 3.5 mg/g)

The pastes 1 to 5 prepared by the above method showed procyanidin amounts ranging from 5.5 to 7.5 mg/g. For the pastes 6 and 7, it ranged from 3.3 to 3.9 mg/g, and for pastes 8 to 11, ranged from 1.1 to 2.5 mg/g. Therefore, for obtaining procyanidin amount of 3.5 mg/g or more, the pH range is preferably 1.0 to 4.5, and most preferably, for obtaining procyanidin amount of 5.0 mg/g or more, the pH range is 1.0 to 4.0.

[Evaluation of remaining ratio of epicatechin]

The amounts of epicatechin in the above pH-adjusted pastes were measured by using HPLC, and the remaining ratio of epicatechin was evaluated.

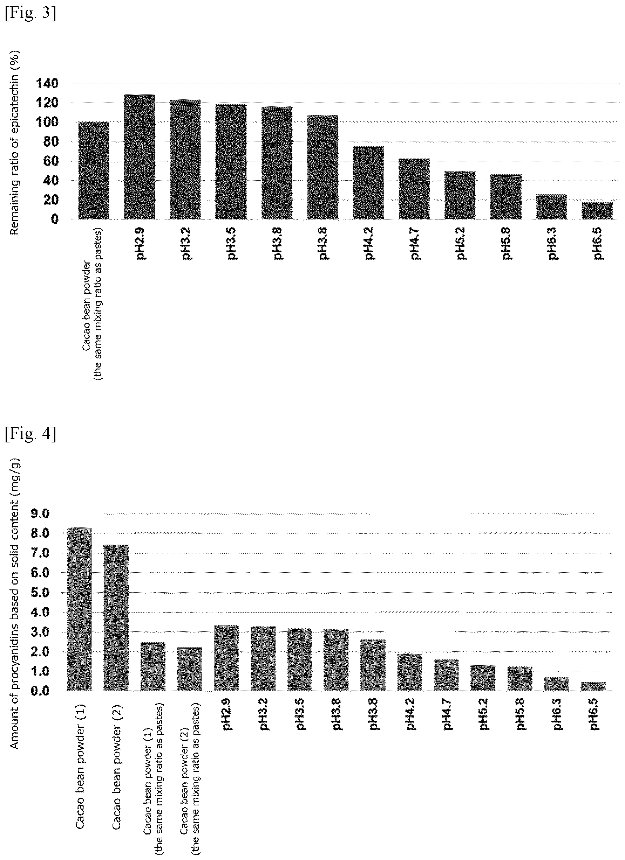

The results are shown in Fig. 3 and the following table.

[Table 5]

| | Comparative Example | Paste 1 | Paste 2 | Paste 3 | Paste 4 | Paste 5 | Paste 6 | Paste 7 | Paste 8 | Paste 9 | Paste 10 | Paste 11 |
|---|---|---|---|---|---|---|---|---|---|---|---|---|
| Sample | Cacao bean powder | pH 2.9 | pH 3.2 | pH 3.5 | pH 3.8 | pH 3.8 | pH 4.2 | pH 4.7 | pH 5.2 | pH 5.8 | pH 6.3 | pH 6.5 |
| Remaining ratio of epicatechin (%) | 100 | 128 | 123 | 118 | 116 | 107 | 76 | 62 | 50 | 46 | 26 | 17 |
| Evaluation | - | A | A | A | A | A | C | D | D | D | D | D |

The measurement for the pastes 1 to 4 and the measurement for the pastes 5 to 11 were separately performed. The measurement was performed also for the cacao bean powder at the same time at each time, and the remaining ratio was calculated.

A: Particularly favorable (90% or higher)
B: Favorable (80% or higher and lower than 90%)
C: Slightly favorable (70% or higher and lower than 80%)
D: Unfavorable (lower than 70%)

For the pastes 1 to 5 prepared by the above method, reduction of epicatechin amount was not observed compared with the comparative example. The paste 6 showed a epicatechin remaining ratio of about 75% compared with the comparative example, and the pastes 7 to 10 showed about epicatechin remaining ratios of 20% to 60%. Therefore, the pH range is preferably 1.0 to 4.5, most preferably 1.0 to 4.0.

[Evaluation of epicatechin amount]

The above pH-adjusted pastes were freeze-dried, defatted and extracted by heat reflux. Then, the amounts of epicatechin in the above pH-adjusted pastes were measured by using HPLC, and evaluated.

[Table 6]

| | Comparative Example 1 | Comparative Example 2 | Comparative Example 3 | Comparative Example 4 | Paste 1 | Paste 2 | Paste 3 | Paste 4 | Paste 5 | Paste 6 | Paste 7 | Paste 8 | Paste 9 | Paste 10 | Paste 11 |
|---|---|---|---|---|---|---|---|---|---|---|---|---|---|---|---|
| Sample | Cacao bean powder (1) | Cacao bean powder (2) | Cacao bean powder(1) (the same mixing ratio as pastes) | Cacao bean powder (2) (the same mixing ratio as pastes) | pH2.9 | pH3.2 | pH3.5 | pH3.8 | pH3.8 | pH4.2 | pH4.7 | pH 5.2 | pH5.8 | pH6.3 | pH6.5 |
| Amount of epicatechin (mg/g) | 8.3 | 7.4 | 2.5 | 2.2 | 3.4 | 3.3 | 3.2 | 3.1 | 2.6 | 1.9 | 1.6 | 1.3 | 1.2 | 0.7 | 0.5 |
| Evaluation | - | - | A | A | A | A | A | A | A | A | C | D | D | D | D |

The measurement for Comparative Examples 1 and 3 and the measurement for Comparative Examples 2 and 4 were separately performed. Similarly, the measurement for the pastes 1 to 4 and the measurement for the pastes 5 to 11 were separately performed. For Comparative Examples 3 and 4, their values were calculated from the results of Comparative Examples 1 and 2, taking into account the cacao bean powder mixing ratio of 30%.

A: Particularly favorable (2.1 mg/g or more)
B: Favorable (1.9 mg/g or more and less than 2.1 mg/g)
C: Slightly favorable (1.7 mg/g or more and less than 1.9 mg/g)
D: Unfavorable (less than 1.7 mg/g)

The epicatechin amounts of the pastes 1 to 5 prepared by the above method were 2.6 to 3.4 mg/g. The amounts were 1.6 to 1.9 mg/g for the pastes 6 to 7, and 0.5 to 1.3 mg/g for the pastes 8 to 11. Therefore, for obtaining epicatechin amount of 1.6 mg/g or larger, pH is preferably in the range of 1.0 to 4.5, and most preferably, for obtaining epicatechin amount of 2.0 mg/g or larger, pH is in the range of 1.0 to 4.0.

[Evaluation of particle size]

Cacao fruit pastes were prepared by the following method, and particle size thereof was measured.

(Method)

1. The two kinds of ingredients mentioned in the following table were ground and mixed by using a mixer (for household use) for about 5 minutes to obtain a "coarsely ground product". The cacao beans taken out from pods kept frozen were prepared.
2. The "coarsely ground product" was ground by using a grinder (Mortar Grinder RM200, RETSCH) with various grinding strengths to obtain about 50 g each of "ground product 4", "ground product 6", and "ground product 8". The numbers 4 to 8 in the names of the ground products indicate the degree of grinding strength of the grinder (not the diameter of the clearance). The larger number means a larger grinding strength, which can provide finer particle size.

[Table 7]

| Composition | | |
|---|---|---|
| | Mixing ratio (%) | Weight (g) |
| Cacao beans (including shells and pulp) | 42.9 | 300 |
| Concentrated pulp juice (Bx60) | 57.1 | 400 |
| Total | 100.0 | 700 |

The particle size distribution measurement was performed by using water as the dispersant. A small amount of cacao fruit paste was added to 50 ml of water in a glass beaker, the mixture was stirred for 15 seconds, treated with a sonicator for 30 seconds, and stirred for 1 minute to make a sample for measurement.
Particle size distribution on the volume basis was measured.

Equipment used: SALD 2100 (Shimadzu Corporation)
Measuring method: Laser diffraction method

(Results)

Although the coarsely ground product showed stronger fruitiness, the samples of the test groups using higher grinding strength showed stronger acidity, oiliness, smoothness, and flavor persistence, and they were smoother and had longer flavor persistence.

[Table 8]

| Flavor evaluation | | | | | | |
|---|---|---|---|---|---|---|
| | Fruitiness | Acidity | Oiliness | Smoothness | Flavor persistence | |
| Coarsely ground product | 5 | 2 | 2 | 2 | 2 | Green-smelling |
| Ground product 4 | 4 | 3 | 3 | 3 | 3 | |
| Ground product 6 | 3 | 4 | 4 | 4 | 4 | |
| Ground product 8 | 2 | 5 | 5 | 5 | 5 | |
| | Stronger grinding gave stronger fruitiness | Stronger grinding gave stronger acidity | Stronger grinding gave stronger oiliness | Stronger grinding gave stronger smoothness | Stronger grinding gave longer flavor persistence | |

Evaluation was performed by two expert panelists. The panelists were asked to compare the results of their evaluations, and the panelists made a consensus judgment based on the following evaluation criteria.

(Evaluation criteria)

Fruitiness:

1 Not fruity
2 Slightly fruit
3 Fruity
4 Inferior to that of the coarsely ground product, but sufficiently fruity
5 Very fruity (same as the coarsely ground product)

Acidity:

1 No acidity
2 Slightly acidic (same as the coarsely ground product)
3 Slightly more acidic compared with the coarsely ground product
4 Clearly more acidic compared with the coarsely ground product
5 Clearly stronger acidity compared with that of the coarsely ground product

Oiliness:

1 Not oily
2 Slightly oily (same as the coarsely ground product)
3 Slightly more oily compared with the coarsely ground product
4 Clearly more oily compared with the coarsely ground product
5 Strongly more oily compared with the coarsely ground product

Smoothness:

1 Not smooth
2 Slightly smooth (same as the coarsely ground product)
3 Slightly smoother compared with the coarsely ground product
4 Obviously smoother compared with the coarsely ground product
5 Significantly smoother compared with the coarsely ground product

Flavor persistence:

1 No flavor persistence
2 Slight flavor persistence (same as that of the coarsely ground product)
3 Slightly longer flavor persistence compared with that of the coarsely ground product
4 Longer flavor persistence compared with that of the coarsely ground product
5 Clearly longer flavor persistence compared with that of the coarsely ground product

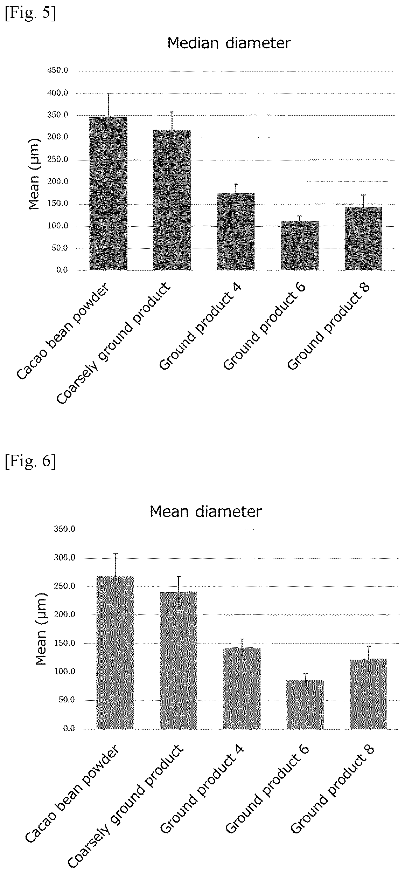

The results of the particle size distribution measurement (n=3 for each) are shown in Figs. 5 and 6.

[Measurement of free fat]

Cacao fruit paste was prepared by the following method, and free fat content thereof was measured.

(Method)

In the same manner as that used in the particle size evaluation, a mixer (household use) was used to obtain a coarsely ground product.

[Table 9]

|  | Mixing ratio (%) | Weight (g) |
| --- | --- | --- |
| Cacao beans (including shells and pulp) | 42.9 | 300 |
| Concentrated pulp juice (Bx60) | 57.1 | 400 |
| Total | 100.0 | 700 |

After grinding with the mixer, the product was heated to 90°C for 15 seconds and cooled at a temperature below 10°C. Then, the product was frozen and further ground, and free fats were measured.
Free fats were measured as the difference of weights measured before and after defatting by hexane defatting. More precisely, free fats were measured by the following method.

1. A sample in an amount of 5 g was put into a 50-ml glass bottle with a lid, and the exact weight thereof including tare was measured.
2. Hexane was added in a volume of 25 ml, and the mixture was vigorously stirred (using vortex mixer).
3. The mixture was shaken at room temperature (25°C) and 162 rpm for about 3 hours.
4. The mixture was centrifuged at 25°C and 3000 rpm for 10 minutes.
5. The hexane was discarded.
6. The residue was air-dried overnight in a draft in order to completely volatilize the hexane.
7. After air-drying, the weight including tare was measured.

(Sample for free fat measurement)

- Cacao fruit paste (coarsely ground product)
- Cacao bean powder (cacao bean ground product obtained by grinding frozen beans)
- Cacao mass

Cacao mass

(Results)

The cacao fruit paste contained approximately 43% of cacao beans and approximately 24% of fats. It was found that 2.6% of the fats constituting 24% of the product had seeped out as free fats. On the other hand, the fat content of the cacao bean powder was about 55%, and it was found that, of the 55% fat content, approximately 3.8% seeped out as free fats. The results including those for the cacao mass are shown in the following table.

[Table 10]

| | | Fat content (%) (theoretical value) | Free fat (%) | Free fat/fat (%) | Mean of free fat/fat (%) | Particle size ($\mu$m) (reference value) |
|---|---|---|---|---|---|---|
| Cacao fruit paste | 1 | 24 | 2.6 | 11.1 | 11.0 | 317.7 |
| | 2 | 24 | 2.6 | 11.0 | | |
| Cacao bean powder | 1 | 55 | 3.8 | 6.9 | 6.8 | 347.1 |
| | 2 | 55 | 3.7 | 6.7 | | |
| Cacao mass | 1 | 55 | 47.7 | 86.8 | 86.8 | 25 $\mu$m or smaller |

[Production Example 1: Cacao fruit ground product]

A cacao fruit ground product was produced according to the composition shown in the following table. Unfermented cacao beans including pulp and shells were taken out from cacao pods. Pulp juice kept refrigerated at 10°C or lower and the above cacao beans including pulp and shells were put into a mixer in the ratio shown in the following table, and ground for 2 to 5 minutes (pH 3.26 during grinding) to obtain a paste-like ground product with a uniform appearance. Then, drinking water kept refrigerated at 10°C or lower was added in the ratio shown in the following table, and the mixture was further vigorously stirred for about 1 minute. The ground product was then passed through a 20 mesh (1 mm or smaller). The ground product was heated to 85°C for at least 15 seconds, and then cooled to 10°C or lower for sterilization and blanching.

[Table 11]

| | Mixing ratio (%) |
|---|---|
| Cacao beans including pulp and shells | 30 |
| Pulp juice | 40 |
| Water | 30 |
| Total | 100 |

The resulting cacao fruit ground product had a pH of 3.8, a particle size of 20 mesh pass, electroconductivity, and a procyanidin content higher than 3.5 mg/g. The resulting ground product was smooth to the palate, red in color, and had a fruity sweetness and acidity.

[Production Example 2: Cacao fruit ground product]

A cacao fruit ground product was produced according to the composition shown in the following table. Unfermented cacao beans including pulp and shells were taken out from cacao pods. Concentrated pulp juice kept refrigerated at 10°C or lower and the above cacao beans including pulp and shells were put into a mixer in the ratio shown in the following table, and ground for 2 to 5 minutes to obtain a paste-like ground product with a uniform appearance. Then, the ground product was passed through a 20 mesh (1 mm or smaller). The ground product was heated to 85°C for 15 seconds or longer, and then cooled to 10°C or lower for sterilization and blanching.

[Table 12]

|  | Mixing ratio (%) |
| --- | --- |
| Cacao beans (including shells and pulp) | 43.0 |
| Concentrated pulp juice (Bx60) | 57.0 |
| Total | 100.0 |

The resulting cacao fruit ground product had a pH of 3.8, a particle size of 20 mesh pass, electroconductivity, and a procyanidin content higher than 3.5 mg/g (6.1 mg/g). The resulting ground product was smooth to the palate, red in color, and had a fruit-like sweetness and acidity.

[Production Example 3: Drink]

Drinks were produced using the ingredients listed in the following table. Water was warmed to 30 to 40°C with stirring, then the ingredients other than water were added, and the temperature was further raised to 70°C with stirring. Pre-emulsification was performed for 10 minutes, and then each mixture was put into a mixer, mixed for 2 minutes, cooled and kept refrigerated at 10°C or lower for 16 hours to obtain a drink.

In the case of the drink 1 as an example, 6 mass % of sugar and 15 mass % of the cacao fruit ground product obtained in Production Example 2 were blended so that the drink should have a solid content of about 11% and a sweetness level of about 6, simulating typical drinks. As comparative examples, cacao mass was blended in the drink 2, and cocoa powder in the drink 3 to achieve the same level of procyanidin content as that of the drink 1, and the solid contents were adjusted to about 11% with sugar.

[Table 13]

|  | Drink 1 Example | Drink 2 Comparative Example | Drink 3 Comparative Example |
| --- | --- | --- | --- |
| Raw materials | Mixing ratio (%) | Mixing ratio (%) | Mixing ratio (%) |
| Cacao fruit ground product (Production Example 2) | 15.0 | 0.0 | 0.0 |
| Cacao mass | 0.0 | 9.3 | 0.0 |
| Cocoa powder | 0.0 | 0.0 | 12.0 |
| Sugar | 6.0 | 2.3 | 0.0 |
| Water | 79.0 | 88.4 | 88.0 |
| Total | 100.0 | 100.0 | 100.0 |
| Solid content (%) | 11.25 | 11.41 | 11.76 |
| Procyanidins (%) | 0.032 | 0.032 | 0.032 |
| Epicatechin (%) | 0.015 | 0.012 | 0.012 |
| Fat content (%) | 1.22 | 5.01 | 2.59 |
| Free fat content (%) | 0.14 | 4.35 | ND |

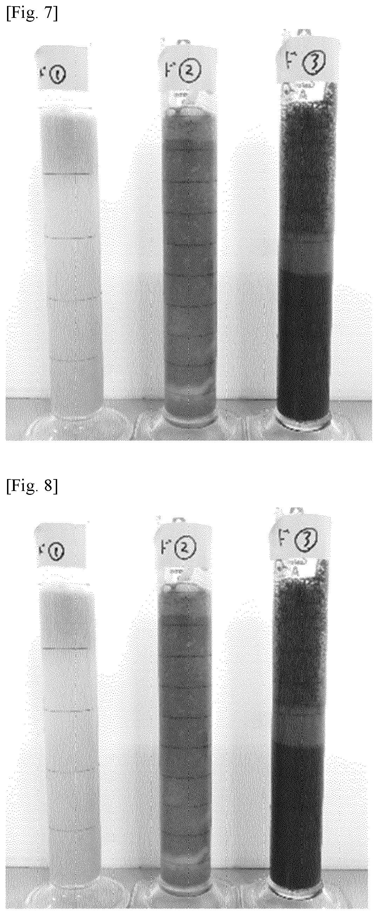

Each drink was poured into a 50-ml measuring cylinder, left standing and kept refrigerated at 10°C or lower for 16 hours, and then it was visually observed (Fig. 7). As a result, no oil separation was observed in the drink 1, although some fiber content as a solid with light specific gravity was suspended in the upper layer. The drink 2 containing cocoa mass separated into an aqueous phase as the lower layer and an oil phase as the upper layer. The drink 3 containing cocoa powder separated into three layers: oil phase, water phase, and precipitates. It was considered that these results were obtained because of the low fat content of the drink 1 and the low free fat content of the cacao fruit ground product, which facilitated stable emulsification, and the high free fat contents of the drinks 2 and 3 resulting from the high free fat contents of the cacao raw materials. The drink produced by using the cacao fruit ground product of the present invention showed higher emulsification stability compared with the drinks having the same procyanidin content produced by using the conventional cacao raw materials, cacao mass and cocoa powder.

Viscosity and pH of each drink were measured. Viscosity was measured by using a B-type viscometer (TVB-10M, Toki Sangyo Co., Ltd.) in an M1 rotor under the conditions of 8 to 10°C, 60 rpm, and 30 seconds. The results are shown in the following table.

Table 14]

|  | Viscosity (mPa·s) | Viscosity measurement temperature (°C) | pH |
|---|---|---|---|
| Drink 1 Example | 16 | 9.0 | 3.9 |
| Drink 2 Comparative Example | 31 | 8.2 | 5.6 |
| Drink 3 Comparative Example | 52 | 9.4 | 6.8 |

The drinks 2 and 3 had high viscosity and sticky physical properties. On the other hand, the drink 1 had low viscosity and high fluidity. The pH of the drink 1 was lower than those of the drinks 2 and 3. The drink containing the cacao fruit ground product of the present invention had a viscosity more suitable for thirst-stopping beverages, compared with the drinks having the same procyanidin content and produced by using conventional cacao raw materials, cacao mass and cocoa powder. Furthermore, the drink containing the cacao fruit ground product is suitable as a health drink claiming to contain procyanidins, because it has a low pH at which procyanidins are stable. In addition, while the drinks 2 and 3 were brown in color, the drink 1 had a light pink color.

Sensory evaluation was conducted for each drink. The sensory evaluation was made on three items, sweetness, roughness, and refreshing sensation, on a five-point scale according to the following criteria, and means of evaluation scores given by three panelists were calculated. The results are shown in the following table.

(Judgment criteria)

Sweetness

1 No sweetness
2 Barely sweet
3 Slightly sweet
4 Clearly sweet
5 Obviously strongly sweet (sweetness of the drink 1 was represented with the score "5")

Roughness

1 No roughness (roughness of the drink 1 = "1")
2 Barely rough
3 Slightly rough
4 Clearly rough
5 Clearly strongly rough

Refreshing sensation

1 Not refreshing sensation
2 Barely refreshing
3 Slightly refreshing
4 Clearly refreshing
5 Significantly refreshing (refreshing sensation of the drink 1 = "5")

[Table 15]

|  | Average (n=3) | | |
| --- | --- | --- | --- |
|  | Drink 1 | Drink 2 | Drink 3 |
| Sweetness | 5 | 1 | 1 |
| Roughness | 1 | 1 | 2 |
| Refreshing sensation | 5 | 3 | 1 |

The drinks 2 and 3 were not rough, but showed significantly weaker sweetness and refreshing sensation. On the other hand, the drink 1 had sweetness, gave refreshing sensation, and had favorable flavor. The drink containing the cacao fruit ground product of the present invention had superior flavor quality compared with the drinks having the same procyanidin content produced by using conventional cacao raw materials.

[Production Example 4: Ice cream]

Ice creams were produced by using the raw materials shown in the following table. Water was warmed to 30 to 40°C with stirring, then the raw materials other than water were added, and the temperature was further raised with stirring until it reached 70°C. After pre-emulsifying for 10 minutes, the mixture was put into a mixer, mixed for 2 minutes, cooled and kept refrigerated at 10°C or lower for 16 hours to obtain ice cream mix. Each ice cream was obtained by freezing 150 g to 500 g of the ice cream mix in a cylinder of a gelato machine (product name FREEZE & GO, CARPIGIANI), taking it out after 10 minutes, and curing it in a paper container at -40°C for 1 hour. The ice cream 1 as an example contained 13 mass % of sugar and 28 mass % of cacao fruit ground product obtained in Production Example 2 in order to achieve a solid content of about 38%, sweetness level of about 13, vegetable fat content of 10 mass %, and skimmed milk powder content of 5 mass %, as in a typical ice cream. As comparative examples, cacao mass was blended in the ice cream 2, and cocoa powder in the ice cream 3 in order to achieve the same level of procyanidin content as the ice cream 1, and the composition was adjusted by using sugar to achieve a solid content of about 38% with constant vegetable oil and nonfat milk powder mixing ratios.

[Table 16]

|  | Ice cream 1 Example | Ice cream 2 Comparison Example | Ice cream 3 Comparison Example |
| --- | --- | --- | --- |
| Raw materials | Mixing ratio (%) | Mixing ratio (%) | Mixing ratio (%) |
| Cacao fruit ground product (Production Example 2) | 28.0 | 0.0 | 0.0 |
| Cacao mass | 0.0 | 17.4 | 0.0 |
| Cocoa powder | 0.0 | 0.0 | 22.5 |
| Sugar | 13.0 | 5.8 | 0.0 |
| Vegetable oils and fats | 10.0 | 10.0 | 10.0 |
| Skimmed milk powder | 5.0 | 5.0 | 5.0 |
| Water | 44.0 | 61.8 | 62.5 |
| Total | 100.0 | 100.0 | 100.0 |
| Solid content (%) | 37.80 | 37.85 | 37.05 |
| Procyanidins (%) | 0.060 | 0.060 | 0.060 |
| Epicatechin (%) | 0.028 | 0.023 | 0.022 |
| Fat content (%) | 10.05 | 19.43 | 14.90 |
| Free fat content (%) | 10.25 | 18.13 | ND |

Each ice cream mix was transferred to a 50-ml measuring cylinder, left stand and kept refrigerated at 10°C or lower for 16 hours, and then visually observed. As a result, there was no separation of the aqueous and oil phases and precipitates in all the ice cream mixes. However, the ice cream mixes 2 and 3 as the comparative examples were not fluid, and solidified. This is presumably due to the fiber and fat content in the cacao materials. If ice cream mix solidifies in the state of ice cream mix before freezing, it is difficult to transport it through piping to the next step during industrial manufacturing. The ice cream mix produced by using the cacao fruit ground product of the present invention had better suitability for production compared with the ice cream mixes with the same procyanidin content produced with conventional cacao raw materials, cacao mass and cocoa powder.

Viscosity and pH of each ice cream mix were measured. Viscosity was measured by using a B-type viscometer with an M2 rotor under the conditions of 10 to 12°C, 60 rpm, and 30 seconds. The results are shown in the following table.

[Table 17]

| | Viscosity (mPa·s) | Viscosity measurement temperature (°C) | pH | Solidifying point |
|---|---|---|---|---|
| Ice cream mix 1 Example | 291.1 | 11.2 | 4.48 | -3.9 |
| Ice cream mix 2 Comparative Example | 500< (1000<) | 10.7 | 5.50 | -1.2 |
| Ice cream mix 3 Comparative Example | 500< (1000<) | 11.7 | 6.45 | -1.2 |

The ice cream mix 1 had a low viscosity in the ranges of viscosity suitable for the industrial production steps of ice cream, the pasteurization and cooling steps (800 mPa·s or lower) and the conveying step (400 mPa·s or lower), and thus it had favorable production suitability. The ice cream mixes 2 and 3 had very high viscosities that exceeded the appropriate viscosity ranges described above. Furthermore, the ice cream mix containing the cacao fruit ground product of the present invention had a low pH at which the procyanidins are stable, making it suitable for the production of ice cream appealing the inclusion of procyanidins. In addition, the ice cream mix 1 had a light pink color, while the ice cream mixes 2 and 3 were brown.

Sensory evaluation of each ice cream was conducted. The sensory evaluation was performed on three items: spoonability, smoothness, and sweetness, and the results were rated on a five-point scale according to the following criteria, and the mean of scores of three panelists was calculated. The ice cream was placed in a thermostatic incubator at -18°C for one hour or longer for temperature conditioning, and the ice cream was evaluated immediately after removal from the incubator for "spoonability," and 10 minutes after removal from the incubator for "smoothness" and "sweetness. The results are shown in the following table.

(Judgment criteria)

Spoonability

1 Obviously bad spoonability
2 Bad spoonability
3 Favorable spoonability
4 Clearly favorable spoonability = score of the ice cream 1
5 Significantly favorable spoonability

Sweetness

1 No sweetness
2 Barely sweet
3 Slightly sweet
4 Obviously sweet = score of the ice cream 1
5 Obviously strongly sweet

Smoothness

1 No smoothness at all
2 Not so smooth
3 Slightly smooth
4 Smooth = score of the ice cream 1
5 Very smooth

[Table 18]

|  | Average (n=3) | | |
|---|---|---|---|
|  | Ice cream 1 Example | Ice cream 2 Comparative Example | Ice cream 3 Comparative Example |
| Spoonability | 4 | 1 | 1 |
| Smoothness | 4 | 2 | 2 |
| Sweetness | 4 | 2 | 1 |

The ice cream 1 showed favorable spoonability and such favorable qualities that smoothness and sweetness could be felt. The ice creams 2 and 3 were hard, resulting in bad spoonability, lacked smoothness, and showed only markedly weak sweetness. The ice cream containing the cacao fruit ground product of the present invention showed superior flavor quality compared with the ice creams having the same procyanidin content and made with conventional cacao raw materials.

[Example 5: Spread]

Spreads were produced by using the raw materials shown in the following table. Liquid oil and solid fat were mixed while adding an emulsifier and heating to 60°C to obtain an oil phase. Preparation water was warmed to 60°C, and high fructose liquid sugar and cacao fruit ground product were mixed to obtain an aqueous phase. The aqueous phase was added to the prepared oil phase, stirred at about 60°C for 10 minutes for pre-emulsification, then sterilized at 95°C for 20 seconds, rapidly cooled to 10°C, and kneaded to obtain a spread having a fat content of 56.3%.

[Table 19]

| Raw material | Spread 1 Example | Spread 2 Example |
|---|---|---|
|  | Mixing ratio (wt%) | Mixing ratio (wt%) |
| Liquid oil (corn oil) | 43.000 | 43.000 |
| Solid fat (hardened oil consisting mainly of palm oil and palm kernel oil) | 12.000 | 12.000 |
| Solid fat (fully hardened palm oil) | 0.500 | 0.500 |
| Emulsifier (lecithin) | 0.500 | 0.500 |
| Emulsifier (glycerol fatty acid ester) | 0.200 | 0.200 |
| Emulsifier (sorbitan fatty acid ester) | 0.100 | 0.100 |
| High fructose liquid sugar | 24.000 | 24.000 |
| Cacao fruit ground product (Production Example 2) | 5.000 | 10.000 |
| Preparation water | 14.7000 | 4.700 |
| Total | 100 | 100 |
| Solid content (%) | 76.17 | 77.92 |
| Procyanidins (%) | 0.0305 | 0.0610 |
| Epicatechin (%) | 0.0145 | 0.0290 |

(continued)

| Raw material | Spread 1 Example | Spread 2 Example |
|---|---|---|
| | Mixing ratio (wt%) | Mixing ratio (wt%) |
| Fat content (%) | 56.30 | 56.30 |
| Free fat content (%) | 56.45 | 56.60 |

The spreads 1 and 2 were filled in small cup containers, temperature-conditioned at 5°C for 12 hours or longer, and statically stored in a thermostatic chamber at 30°C for 0 to 2 hours, and oil separation was visually observed. No significant oil separation was observed in any of the spreads until after 2 hours.

The spreads containing the cacao fruit ground product of the present invention had a light pink color, and showed stable emulsification and excellent spreadability.

[Example 6: Smoothie]

Smoothies were prepared by using the raw materials shown in the following table. All the raw materials were put into a mixer, mixed for 2 minutes, and cooled to 10°C or lower to obtain a smoothie.

[Table 20]

| | Smoothie 1 Example | Smoothie 2 Example | Smoothie 3 Example |
|---|---|---|---|
| Raw material | Mixing ratio (wt%) | Mixing ratio (wt%) | Mixing ratio (wt%) |
| Cacao fruit ground product (Production Example 2) | 27.8 | 25.0 | 33.3 |
| Banana | 22.2 | 25.0 | 0 |
| Orange | 11.1 | 0 | 0 |
| Water | 13.9 | 0 | 33.4 |
| Plain yogurt | 22.2 | 0 | 0 |
| Lemon juice | 2.8 | 0 | 0 |
| Soy milk | 0 | 50.0 | 0 |
| Ice | 0 | 0 | 33.3 |
| Total | 100.0 | 100.0 | 100.0 |
| Procyanidins (%) | 0.17 | 0.15 | 0.20 |
| Epicatechin (%) | 0.08 | 0.07 | 0.10 |

All the obtained smoothies had a sticky texture and richness, and gave a feeling as if eating fresh raw cacao fruits. They also had fruity acidity and flowery aroma. They also had a light pink color.

[Example 7: Ice confectionery]

Ice confectionaries (1: sherbet, and 2: frozen yogurt) were produced by using the raw materials shown in the following table. The production method was the same as that used for the ice creams in Production Example 4.

[Table 21]

| | Ice confectionery 1 Example | Ice confectionery 2 Example |
|---|---|---|
| Raw material | Mixing ratio (wt%) | Mixing ratio (wt%) |
| Cacao fruit ground product (Production Example 2) | 60.2 | 27.0 |
| Water | 36.2 | 27.1 |

(continued)

| | Ice confectionery 1 Example | Ice confectionery 2 Example |
|---|---|---|
| Raw material | Mixing ratio (wt%) | Mixing ratio (wt%) |
| Lemon juice | 3.6 | 2.7 |
| Concentrated orange juice | 0 | 21.6 |
| Plain yogurt | 0 | 21.6 |
| Total | 100.0 | 100.0 |
| Procyanidins (%) | 0.37 | 0.16 |
| Epicatechin (%) | 0.17 | 0.08 |

The resulting ice confectionery 1 had a vivid red color, the ice confectionery 2 had a light red color, and both had a sticky texture and richness, and gave a feeling as if eating fresh raw cacao fruits.

[Production Example 8]

Samples 1 to 8 were produced by using the raw materials (see Fig. 9), compositions shown in the following tables, and the production method described below.

(Sample)

[Table 22]

| Sample | Raw material | | Form |
|---|---|---|---|
| 1 | Vietnamese cacao beans A | Cacao pod | Paste |
| 2 | Vietnamese cacao beans B | Cacao pod | Paste |
| 3 | Vietnamese cacao beans C | Cacao pod | Paste |
| 4 | Vietnamese cacao beans D | Unfermented dried beans | Paste |
| 5 | Vietnamese cacao beans A | Cacao pod | FD product of paste |
| 6 | Vietnamese cacao beans B | Cacao pod | FD product of paste |
| 7 | Vietnamese cacao beans C | Cacao pod | FD product of paste |
| 8 | Vietnamese cacao beans D | Unfermented dried beans | FD product of paste |
| FD: Freeze Dried | | | |

(Composition)

Compositions of the pastes are shown in the following table.

[Table 23]

| Composition of pastes of sample 1 to 3 | |
|---|---|
| | Mixing ratio (%) |
| Beans and pulp | 43 |
| Concentrated pulp juice | 57 |

Composition of paste of sample 4

|  | Mixing ratio (%) |
| --- | --- |
| Beans (dried) | 27 |
| Concentrated pulp juice | 73 |

(Production method)

1. Cacao beans (seeds) having pulp and shells were taken out from cacao pods (this step was not performed when unfermented dried beans were used, unfermented dried beans are dried beans with shells)
2. The resultant of 1 was combined with the concentrated pulp juice and primarily ground with a household mixer (Panasonic Fiber Mixer MX-X301).
3. The ground mixture was heated (85°C for 15 seconds).
4. The mixture was secondarily ground by using Silverson High Shear Mixer (model LSM-A) using a square-hole high shear screen (clearance: 2.00 mm)). Thereafter, the pastes of the samples 1 to 4 were sampled.
5. Each paste was frozen at -40°C.
6. The paste was freeze-dried in a freeze-dryer (Freeze Dryer (model TFS-80TANN), TAKARA ATM) by heating on shelf at 20°C and 5.8 Pa for 96 hours. Thereafter, the freeze-dried products (FD product) of the samples 5 to 8 were sampled.

(Measurement results)

Moisture content was measured by the decompression drying method (100°C, 4 hours). The solid contents based on the measurement results are shown in the following table.

[Table 24]

| Sample | | Solid content (%) |
| --- | --- | --- |
| 1 | Vietnamese cacao bean A paste | 53.9 |
| 2 | Vietnamese cacao bean B paste | 53.4 |
| 3 | Vietnamese cacao bean C paste | 48.0 |
| 4 | Unfermented dry bean paste | 67.2 |
| 5 | Vietnamese cacao bean A paste FD product | 92.3 |
| 6 | Vietnamese cacao bean B paste FD product | 91.3 |
| 7 | Vietnamese cacao bean C paste FD product | 90.4 |
| 8 | Unfermented dried bean paste FD product | 91.2 |

The freeze-dried products 5 to 8 were extracted for procyanidins by heat reflux without defatting. The extract was subjected to HPLC to quantify procyanidins. Specifically, Deverosil -ODS-HGS (4.6 mm x 250 mm, φ 5 μ, Nomura Chemical Co.) was used as the column. The eluent consisted of solution A and solution B, wherein the solution A was 0.1% trifluoroacetic acid aqueous solution, and the solution B was 0.1% trifluoroacetic acid/acetonitrile solution. The flow rate of the eluent passed through the column was 0.8 ml/minute, and the gradient conditions were as follows: the ratio of the solution B to the total eluent was 10% at the start, 10% after 5 minute from the start, 25% after 35 minutes from the start, 100% after 40 minutes from the start, and 100% after 45 minutes from the start. The sample injection volume was 10 μL. Epicatechin was used as a standard, and the amounts of catechin, epicatechin, procyanidin B2, procyanidin B5, procyanidin C1, and cinnamtannin A2 were calculated as the epicatechin equivalent amount.

[Table 25]

| Sample | | Epicatechin (mg/g) | Total of 6 types of procyanidins (mg/g) | Solid content (%) | Procyanidin amount based on solid content (mg/g) |
|---|---|---|---|---|---|
| 5 | Vietnamese cacao bean A paste FD product | 3.75 | 9.04 | 92.3 | 9.8 |
| 6 | Vietnamese cacao bean B paste FD product | 3.74 | 8.85 | 91.3 | 9.7 |
| 7 | Vietnamese cacao bean C paste FD product | 2.77 | 6.72 | 90.4 | 7.4 |
| 8 | Unfermented dried bean paste FD product | 4.55 | 10.54 | 91.2 | 11.6 |

pH measurement was also performed. In addition, color tone analysis was performed. By using a spectrophotometer CR-5 (Konica Minolta, Inc.) as the measurement device, L*a*b* values were measured for about 40 ml of each sample at room temperature in a special petri dish (container).

Sensory evaluation was performed by two expert panelists. The panelists were asked to compare the results of their evaluations, and the panelists made a consensus judgment according to the following evaluation criteria.

(Evaluation criteria)

Fruitiness:

1 Not fruity
2 Slightly fruity
3 Slightly strongly fruity
4 Strongly fruity
5 Extremely strongly fruity

Acidity:

1 No acidity
2 Slightly acidic
3 Slightly strongly acidic
4 Strongly acidic
5 Extremely strongly acidic

Astringency:

1 No astringency
2 Slightly astringent
3 Slightly strongly astringent
4 Strongly astringent
5 Extremely strongly astringent

The results are shown in the following table.

[Table 26]

| | 1 | 2 | 3 | 4 | 5 | 6 | 7 | 8 |
|---|---|---|---|---|---|---|---|---|
| | Vietnamese cacao bean A paste | Vietnamese cacao bean B paste | Vietnamese cacao bean C paste | Unfermented dried bean paste | Vietnamese cacao bean A paste FD product | Vietnamese cacao bean B paste FD product | Vietnamese cacao bean C paste FD product | Unfermented dried beans paste FD product |
| PH | 3.7 | 3.6 | 3.5 | 3.6 | | | | |
| L* | 48.30 | 42.60 | 47.62 | 29.75 | 63.93 | 60.61 | 67.12 | 54.44 |
| a* | 26.42 | 29.66 | 31.00 | 26.64 | 22.55 | 26.59 | 24.99 | 24.27 |
| b* | 8.72 | 7.70 | 8.75 | 7.42 | 7.43 | 7.28 | 5.49 | 9.07 |
| Fruitiness | 4 | 5 | 3 | 3 | 4 | 5 | 2 | 2 |
| Acidity | 3 | 4 | 3 | 4 | 3 | 4 | 2 | 2 |
| Astringency | 2 | 1 | 2 | 4 | 2 | 1 | 2 | 5 |
| Comments | Strongly fruity | Strong sweetness and acidity, refreshing top flavor | Mild flavor, low strengths of tastes | Cacaoish taste, strong astringency | Green-smelling, reduced fruitiness, sweet and acidic | Strongly sweet and acidic, strong fruitiness | Sticky, green-smelling, melon flavor | Strong astringency, weak acidity and sweetness, astringency remains in the mouth |

All the resulting pastes and dried products had a desirable red color, and gave a wide variety of flavors including fruity flavor, acidity, and astringency.

**Claims**

1. A cacao fruit ground product having a pH of 4.5 or lower, a color tone of an L* value of 29 or larger, an a* value of 18 or larger, and a b* value of 25 or smaller, and elecroconductivity.

2. The cacao fruit ground product according to claim 1, which contains 3.5 mg/g or more of procyanidins based on solid content.

3. The cacao fruit ground product according to claim 1 or 2, which has such a particle size as to pass through 20 mesh.

4. The cacao fruit ground product according to any one of claims 1 to 3, wherein remaining ratio of procyanidins derived from raw material cacao beans is 80% or higher.

5. A method for producing a cacao fruit ground product that has been ground and subjected to an enzyme inactivation treatment, which comprises the following steps:

   the step of grinding cacao fruits under such conditions that moisture is present, and activity of polyphenol oxidase derived from the cacao fruits is effectively inhibited, and
   the step of inactivating polyphenol oxidase derived from the cacao fruits.

6. The production method according to claim 5, wherein the condition for effectively inhibiting the activity of the polyphenol oxidase derived from cacao fruits is acidity.

7. The production method according to claim 5 or 6, wherein the enzyme inactivation treatment comprises heating at 80 to 121°C for 10 seconds or longer and then cooling.

8. A method for producing a food material having a color tone of an L* value of 29 or larger, an a* value of 18 or larger, and a b* value of 25 or smaller, comprising the following steps:

   the step of grinding cacao fruits in the presence of moisture at an acidic pH;
   the step of inactivating polyphenol oxidase derived from the cacao fruits; and
   the step of obtaining the ground and enzyme-inactivated cacao fruit ground product as a food material.

9. The production method according to claim 8, which further comprises the step of adjusting pH of the enzyme-inactivated cacao fruit ground product to 4.5 or lower.

[Fig. 1]

[Fig. 2]

[Fig. 3]

[Fig. 4]

[Fig. 5]

Median diameter

[Fig. 6]

Mean diameter

[Fig. 7]

[Fig. 8]

# EP 4 349 180 A1

<table>
<tr><td colspan="2">INTERNATIONAL SEARCH REPORT</td><td colspan="2">International application No.<br><br>**PCT/JP2022/022078**</td></tr>
</table>

**A.** **CLASSIFICATION OF SUBJECT MATTER**

*A23G 1/00*(2006.01)i

FI: A23G1/00

According to International Patent Classification (IPC) or to both national classification and IPC

**B.** **FIELDS SEARCHED**

Minimum documentation searched (classification system followed by classification symbols)

A23G1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.** **DOCUMENTS CONSIDERED TO BE RELEVANT**

| Category* | Citation of document, with indication, where appropriate, of the relevant passages | Relevant to claim No. |
|---|---|---|
| A | WO 2020/158927 A1 (MEIJI CO., LTD.) 06 August 2020 (2020-08-06) | 1-9 |
| A | WO 2021/066119 A1 (MEIJI CO., LTD.) 08 April 2021 (2021-04-08) | 1-9 |
| A | WO 2021/074271 A1 (SOCIETE DES PRODUITS NESTLE S.A.) 22 April 2021 (2021-04-22) | 1-9 |
| A | WO 2020/225056 A1 (SOCIETE DES PRODUITS NESTLE S.A.) 12 November 2020 (2020-11-12) | 1-9 |
| A | JP 2021-506225 A (SOCIETE DES PRODUITS NESTLE S. A) 22 February 2021 (2021-02-22) | 1-9 |
| A | JP 2021-036856 A (NISSHIN KAKO CO., LTD.) 11 March 2021 (2021-03-11) | 1-9 |
| A | JP 4-020272 A (MORINAGA SEIKA KK) 23 January 1992 (1992-01-23) | 1-9 |
| A | JP 4-020248 A (MORINAGA SEIKA KK) 23 January 1992 (1992-01-23) | 1-9 |
| A | JP 2018-520701 A (ODC LIZENZ AG) 02 August 2018 (2018-08-02) | 1-9 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/022078**

**C. DOCUMENTS CONSIDERED TO BE RELEVANT**

| Category* | Citation of document, with indication, where appropriate, of the relevant passages | Relevant to claim No. |
|---|---|---|
| A | WO 2017/005373 A1 (ODC LIZENZ AG) 12 January 2017 (2017-01-12) | 1-9 |
| A | FOODIE, [online], 29 January 2020 [retrieved on 08 April 2022], Internet: <URL:https://mi-journey.jp/foodie/61311/><br>    entire text | 1-9 |
| A | Frutafruta official blog [online], 13 May 2014 [retrieval date 08 June 2022], Internet:<URL:https://cookpad.com/recipe/2871908><br>    entire text | 1-9 |
| A | APeCA official site [online], 2020.05.14 [retrieved on 08 August ], internet: <URL:https://www.apeca.co.jp/feature/441/><br>    entire text | 1-9 |
| A | The Chocolate Journal [online], 24 September [retrieved on 08 August ], internet:<URL:https://chocolatejournal.fun/archives/52445793.html><br>    entire text | 1-9 |
| A | Salon Du Chocolat official Japanese website [online], 22 December 2015 [retrieved on 08 August 2022], internet: <URL:https://www.salon-du-chocolat.jp/pages/featured/2266><br>    entire text | 1-9 |

Form PCT/ISA/210 (second sheet) (January 2015)

## INTERNATIONAL SEARCH REPORT

International application No.

**PCT/JP2022/022078**

**Box No. III**   **Observations where unity of invention is lacking (Continuation of item 3 of first sheet)**

This International Searching Authority found multiple inventions in this international application, as follows:

The invention as in claims 1, 5, and 8 share the technical feature of a "cacao fruit pulverized product." However, this technical feature does not make a contribution over the prior art in light of the content disclosed in document 1, for example (example 1 discloses a cacao pulp juice freeze-dried powder containing cocoa powder), and thus this technical feature cannot be said to be a special technical feature. Furthermore, there are no other identical or corresponding special technical features between these inventions.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/022078**

| Patent document cited in search report | | | Publication date (day/month/year) | Patent family member(s) | | | Publication date (day/month/year) |
|---|---|---|---|---|---|---|---|
| WO | 2020/158927 | A1 | 06 August 2020 | US | 2022/0095640 | A1 | |
| | | | | EP | 3918922 | A1 | |
| | | | | JP | 2020-124123 | A | |
| WO | 2021/066119 | A1 | 08 April 2021 | (Family: none) | | | |
| WO | 2021/074271 | A1 | 22 April 2021 | WO | 2021/074316 | A1 | |
| WO | 2020/225056 | A1 | 12 November 2020 | EP | 3962282 | A1 | |
| JP | 2021-506225 | A | 22 February 2021 | US | 2020/0037630 | A1 | |
| | | | | US | 2021/0092976 | A1 | |
| | | | | US | 2021/0161168 | A1 | |
| | | | | WO | 2019/115731 | A1 | |
| | | | | WO | 2019/115735 | A1 | |
| | | | | WO | 2019/149909 | A1 | |
| | | | | EP | 3498102 | A1 | |
| | | | | EP | 3824737 | A1 | |
| | | | | EP | 3824738 | A1 | |
| | | | | EP | 3837989 | A1 | |
| | | | | EP | 3723494 | A1 | |
| | | | | EP | 3520621 | A1 | |
| | | | | JP | 2021-506732 | A | |
| | | | | JP | 2021-511777 | A | |
| JP | 2021-036856 | A | 11 March 2021 | (Family: none) | | | |
| JP | 4-020272 | A | 23 January 1992 | (Family: none) | | | |
| JP | 4-020248 | A | 23 January 1992 | (Family: none) | | | |
| JP | 2018-520701 | A | 02 August 2018 | US | 2018/0295853 | A1 | |
| | | | | WO | 2017/005370 | A1 | |
| | | | | EP | 3114942 | A1 | |
| | | | | EP | 3345485 | A1 | |
| WO | 2017/005373 | A1 | 12 January 2017 | EP | 3345486 | A1 | |
| | | | | EP | 3114939 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018520701 A
- JP 6655177 B
- JP 2011509681 A
- JP 5323862 B
- WO 2000022935 A
- JP 2014509873 A
- JP 6434308 B
- US 8048469 B
- JP 2011502541 A